# EUROPEAN PATENT APPLICATION

(11) **EP 3 288 044 A1**
(43) Date of publication of application: **28.02.2018**
(21) Application number: 16782533.0
(22) Date of filing: 25.03.2016
(51) Int. Cl.: H01F 1/34, C04B 35/26

(54) **SOFT-MAGNETIC MNZN SYSTEM POWER FERRITE**

(30) Priority: 22.04.2015 CN 201510193299
(71) Applicant: Hengdian Group DMEGC Magnetics Co. Ltd., Dongyang, Zhejiang 322118 (CN)
(72) Inventor: ZHAO, Xu, Dongyang Zhejiang 322118 (CN); GU, Xiaojian, Dongyang Zhejiang 322118 (CN); LU, Feixiang, Dongyang Zhejiang 322118 (CN); ZHANG, Xueqiang, Dongyang Zhejiang 322118 (CN)
(74) Representative: Elzaburu S.L.P.
(86) International application number: PCT/CN2016/077317
(87) International publication number: WO 2016/169385

(57) **Abstract**

The invention discloses a soft-magnetic MnZn system power ferrite, and aims at providing a soft-magnetic MnZn system power ferrite with high saturation magnetic flux density and low loss. The soft-magnetic MnZn system power ferrite comprises a main component and an auxiliary component; the main component comprises Fe₂O₃, MnO, ZnO and NiO; calculated on the basis of the total weight of the main component, Fe₂O₃ accounts for 53.0-55.0mol%, ZnO accounts for 3.0-7.0mol%, NiO accounts for 0-1.0mol%, and MnO accounts for the balance; and the auxiliary component comprises CoO, SiO₂, CaCO₃, Nb₂O₅ and ZrO₂. The soft-magnetic MnZn system power ferrite has the beneficial effects that the saturation magnetic flux density Bs at 100°C is larger than 460mT, and the magnetic core loss Pcv at 100°C is smaller than 320kW/m³; the soft-magnetic MnZn system power ferrite has such favorable performance, so that a device can be further miniaturized in the actual application of a product; and because of rather low loss, the work efficiency of the device can also be further increased.

## Description

### Technical field

The invention relates to the relevant technical field of ferrites, and particularly relates to a soft-magnetic MnZn system power ferrite.

### Background

An MnZn ferrite is widely applied to the fields of electronics and communication as a power transformer material. A parameter that the output power of the traditional switch power supply is directly related to a material is the saturation magnetic flux density of the material. The material with high saturation magnetic flux density can make a switch power supply more miniaturized and thinned. The conversion efficiency of electric energy can be affected by the power loss of the material, and the lower the power loss is, the higher the conversion efficiency of a device is.

In recent years, various studies have been performed on a ferrite material with high saturation magnetic flux density and low loss in the industry, a main component has been studied in Chinese invention patents such as CN102063989, CN101483092, CN101552073 and CN102194561, favorable performance has been achieved, however, the saturation magnetic flux density Bs at 100°C cannot be larger than or equal to 460mT. In the Chinese invention patent CN101290827, the saturation magnetic flux density Bs at 100°C reaches 460mT, but the process is not the traditional soft-magnetic ferrite process, and batch production is difficult. The Chinese invention patent CN103964832 acquires the achievement that the saturation magnetic flux density Bs at 100°C is larger than 470mT, but 1-4mol% of NiO is used in a main component, and the market competitiveness of a material is reduced due to the very high cost of Ni.

### Summary of the Invention

In order to overcome defects of low saturation magnetic flux density and high loss existing in the prior art, the invention provides a soft-magnetic MnZn system power ferrite with high saturation magnetic flux density and low loss.

In order to achieve the aim, the technical scheme is adopted as follows:
the soft-magnetic MnZn system power ferrite comprises a main component and an auxiliary component, the main component comprises Fe₂O₃, MnO, ZnO and NiO, calculated on the basis of the total weight of the main component, Fe₂O₃ accounts for 53.0-55.0mol%, ZnO accounts for 3.0-7.0mol%, NiO accounts for 0-1.0mol%, and MnO accounts for the balance, and the auxiliary component comprises CoO, SiO2, CaCO3, Nb2O5 and ZrO2.

The relatively high Bs value of the soft-magnetic MnZn system power ferrite material disclosed by the invention is achieved by increasing the content of Fe₂O₃ and reducing the content of ZnO, and the contents of Fe₂O₃ and ZnO require to be regulated by matching due to the demand of keeping the power loss at 100°C lowest. The requirements of high Bs and low power loss can be simultaneously met when the contents of Fe₂O₃ and ZnO are within the aforementioned range; when the content of Fe₂O₃ is lower than the aforementioned range, the Bs at 100°C will be lower than 460mT; and when the content of Fe₂O₃ is higher than the aforementioned range, the content of Fe²⁺ will be increased, so that the electrical resistivity of the material is reduced, the eddy current power loss is increased, and finally, the power loss at 100°C cannot meet the requirement of being smaller than 320kW/m³, wherein the content range of NiO contains 0. NiO in the main component has the main effects as follows: the temperature at the lowest point of power loss can move towards a high temperature when NiO is added, and the content of Fe₂O₃ requires to be increased in order to ensure that the power loss at 100°C is lowest, so that the Bs value of the material in which NiO is added is increased to some extent. Meanwhile, a temperature coefficient of an anisortropy constant of the material can be changed by the addition of NiO, so that the power loss of the material at 25°C can be reduced, while the power loss at 100°C can be increased, and when the content of NiO exceeds the aforementioned range, the power loss at 100°C can exceed the requirement of being smaller than 320kW/m³. The soft-magnetic MnZn system power ferrite material is prepared by grinding, pressing and sintering according to the mutual matching of a special component formula and doped elements serving as the auxiliary component, wherein the formula of the main component is used for striving to more reasonably provide a favorable basis for doping, the unique doping is further performed on the basis to promote better liquid-phase sintering and more refined grains and grow more uniform and refined grains, meanwhile, a gas hole ratio of a grain boundary is controlled, the relatively high sintering density is formed, and finally, a more reasonable soft-magnetic microstructure is generated, so that the soft-magnetic MnZn system power ferrite with high saturation magnetic flux density and low loss is obtained.

Preferably, the auxiliary component comprises a first auxiliary component and a second auxiliary component, the first auxiliary component is CoO, and calculated on the basis of the total weight of the main component, the content of CoO is 0-0.15wt%, wherein the content range of CoO contains 0. The first auxiliary component CoO has the main effects as follows: the temperature at the lowest point of power loss can move towards a low temperature when CoO is added, and the content of Fe₂O₃ is required to be reduced in order to ensure that the power loss at 100°C is lowest, so that the Bs value of the material in which CoO is added is reduced to some extent, and the Bs value at 100°C cannot meet the requirement of larger than 460mT when the content of CoO exceeds the range. In addition, a temperature coefficient of an anisortropy constant of the material can be changed by the addition of CoO, so that the power loss of the material at 25°C can be reduced, while the power loss at 100°C can be increased, however, within the aforementioned range, the power loss of the material conforms to the requirement of being smaller than 320kW/m³.

Preferably, the second auxiliary component comprises SiO₂, CaCO₃, Nb₂O₅ and ZrO₂, and calculated on the basis of the total weight of the main component, SiO₂ accounts for 0.005-0.015wt%, CaCO₃ accounts for 0.03-0.15wt%, Nb₂O₅ accounts for 0.05-0.4wt%, and ZrO₂ accounts for 0.05-0.4wt%.

Preferably, under a test condition of 1194A/m, saturation magnetic flux density Bs of the soft-magnetic MnZn system power ferrite at 25°C is larger than 550mT, and the saturation magnetic flux density Bs of the soft-magnetic MnZn system power ferrite at 100°C is larger than 460mT.

Preferably, under test conditions of 100kHz and 200mT, power loss Pcv of the soft-magnetic MnZn system power ferrite at 25°C is smaller than 750kW/m³, and the power loss Pcv of the soft-magnetic MnZn system power ferrite at 100°C is smaller than 320kW/m³.

The soft-magnetic MnZn system power ferrite has the beneficial effects that the saturation magnetic flux density Bs at 100°C is larger than 460mT, and the magnetic core loss Pcv at 100°C is smaller than 320kW/m³; the soft-magnetic MnZn system power ferrite has such favorable performance, so that a device can be further miniaturized in the actual application of a product; and because of rather low loss, the work efficiency of the device can also be further increased.

### Detailed Description of the Invention

The invention is further described in detail below in conjunction with the detailed description.

The soft-magnetic MnZn system power ferrite can be produced in batches by using the traditional process, so that a unified production process is adopted for production in the following embodiments, the only difference lies in formulae, and the concrete preparation process is as follows:
1. proportioning:
   respectively calculating proportions of Fe₂O₃, MnO and ZnO according to proportions in each embodiment and each comparative example, weighing three raw materials including Fe₂O₃, Mn₃O₄ and ZnO, then, adding deionized water into a sand mill to mix and crush for 40min, and carrying out spray granulation after carrying out recycle mixing for 10min;
2. pre-sintering:
   placing a spray material into a pre-sintering furnace, and carrying out pre-sintering at 850°C for 3h;
3. secondary sanding:
   adding the following auxiliary components into a pre-sintered material in percentage by weight: 0.08wt% of CaCO₃, 0.05wt% of SiO₂, 0.02wt% of Nb₂O₅ and 0.02wt% of ZrO₂, wherein CoO and NiO are weighed according to each embodiment and each comparative example; and then, placing powder into the sand mill, and adding deionized water to carry out secondary sanding for 90min;
4. spray granulation and forming:
   adding about 0.08wt% of PVA and 0.004wt% of defoaming agent into the material subjected to secondary sanding, then carrying out spray granulation in a spray tower to form particles with sizes of 50-200µm, and forming an H25*15*8mm standard sample ring blank with the density of 3.00-3.15g/cm³ from the particles in the different embodiments and the comparative examples;
5. sintering:
   carrying out heating at a certain proportion of oxygen and nitrogen, carrying out sintering at the temperature condition of 1300°C for 5h, and then, carrying out cooling to room temperature at a certain proportion of oxygen and nitrogen, wherein the partial pressure of oxygen during sintering is 5%; and
6. testing:
   testing power loss Pcv and saturation magnetic flux density Bs of a sintered sample ring by using an SY8218 instrument produced by the Japan Iwasaki company, wherein the testing conditions are respectively as follows: Pcv is tested under the conditions of 100kHz and 200mT; and Bs is tested under the conditions of 50Hz and 1194A/m.

The following embodiments are exampled for better illustrating the invention, while the invention is not limited to these embodiments.

### Embodiment 1

Fe₂O₃=54.8mol%, ZnO=3mol%, MnO=42.2mol%, NiO=0.0mol%, and CoO=0.08wt%.

### Embodiment 2

Fe₂O₃=54.4mol%, ZnO=4mol%, MnO=41.6mol%, NiO=0.0mol%, and CoO=0.08wt%.

### Embodiment 3

Fe₂O₃=54.0mol%, ZnO=5mol%, MnO=41.0mol%, NiO=0.0mol%, and CoO=0.08wt%.

### Embodiment 4

Fe₂O₃=53.6mol%, ZnO=6mol%, MnO=40.4mol%, NiO=0.0mol%, and CoO=0.08wt%.

### Embodiment 5

Fe₂O₃=53.2mol%, ZnO=7mol%, MnO=39.8mol%, NiO=0.0mol%, and CoO=0.08wt%.

### Comparative example 1

Fe₂O₃=55.2mol%, ZnO=2mol%, MnO=42.8mol%, NiO=0.0mol%, and CoO=0.08wt%.

### Comparative example 2

Fe₂O₃=52.8mol%, ZnO=8mol%, MnO=39.2mol%, NiO=0.0mol%, and CoO=0.08wt%.

### Embodiment 6

Fe₂O₃=54.0mol%, ZnO=6mol%, MnO=39.5mol%, NiO=0.5mol%, and CoO=0.08wt%.

### Embodiment 7

Fe₂O₃=54.0mol%, ZnO=6mol%, MnO=39.1mol%, NiO=0.9mol%, and CoO=0.08wt%.

### Embodiment 8

Fe₂O₃=54.0mol%, ZnO=6mol%, MnO=39.0mol%, NiO=1.0mol%, and CoO=0.08wt%.

### Comparative example 3

Fe₂O₃=54.4mol%, ZnO=6mol%, MnO=37.6mol%, NiO=2.0mol%, and CoO=0.08wt%.

### Embodiment 9

Fe₂O₃=53.8mol%, ZnO=6mol%, MnO=40.2mol%, NiO=0.0mol%, and CoO=0.0wt%.

### Embodiment 10

Fe₂O₃=53.7mol%, ZnO=6mol%, MnO=40.3mol%, NiO=0.0mol%, and CoO=0.04wt%.

### Embodiment 11

Fe₂O₃=53.5mol%, ZnO=6mol%, MnO=40.5mol%, NiO=0.0mol%, and CoO=0.12wt%.

### Embodiment 12

Fe2O3=53.4mol%, ZnO=6mol%, MnO=40.6mol%, NiO=0.0mol%, and CoO=0.15wt%.

### Comparative example 4

Fe₂O₃=53.0mol%, ZnO=6mol%, MnO=41.0mol%, NiO=0.0mol%, and CoO=0.20wt%.

The soft-magnetic MnZn system power ferrite is prepared according to the formula in each of the embodiments and the comparative examples, and is tested in term of performance by pressure ring sintering, and test results are shown in table 1.

**Table 1**

| | Fe₂O₃ | MnO | ZnO | NiO | Co O | Bs 25°C | Bs 100°C | Pcv 25°C | Pcv 100°C |
|---|---|---|---|---|---|---|---|---|---|
| | mol% | mol % | mol% | mol % | wt% | mT | mT | kW/m³ | kW/m 3 |
| Embodiment 1 | 54.8 | 42.2 | 3.0 | 0.0 | 0.08 | 555 | 464 | 738 | 319 |
| Embodiment 2 | 54.4 | 41.6 | 4.0 | 0.0 | 0.08 | 553 | 463 | 714 | 312 |
| Embodiment 3 | 54.0 | 41.0 | 5.0 | 0.0 | 0.08 | 553 | 462 | 708 | 303 |
| Embodiment 4 | 53.6 | 40.4 | 6.0 | 0.0 | 0.08 | 554 | 462 | 703 | 300 |
| Embodiment 5 | 53.2 | 39.8 | 7.0 | 0.0 | 0.08 | 551 | 460 | 695 | 293 |
| Comparative example 1 | 55.2 | 42.8 | 2.0 | 0.0 | 0.08 | 558 | 465 | 772 | 347 |
| Comparative example 2 | 52.8 | 39.2 | 8.0 | 0.0 | 0.08 | 546 | 454 | 680 | 289 |
| Embodiment 6 | 54.0 | 39.5 | 6.0 | 0.5 | 0.08 | 553 | 460 | 702 | 310 |
| Embodiment 7 | 54.0 | 39.1 | 6.0 | 0.9 | 0.08 | 553 | 462 | 699 | 315 |
| Embodiment 8 | 54.0 | 39.0 | 6.0 | 1.0 | 0.08 | 553 | 463 | 697 | 317 |
| Comparative example 3 | 54.4 | 37.6 | 6.0 | 2.0 | 0.08 | 556 | 467 | 702 | 325 |
| Embodiment 9 | 53.8 | 40.2 | 6.0 | 0.0 | 0.0 | 552 | 463 | 745 | 308 |
| Embodiment 10 | 53.7 | 40.3 | 6.0 | 0.0 | 0.04 | 553 | 462 | 723 | 302 |
| Embodiment 11 | 53.5 | 40.5 | 6.0 | 0.0 | 0.12 | 551 | 461 | 698 | 310 |
| Embodiment 12 | 53.4 | 40.6 | 6.0 | 0.0 | 0.15 | 552 | 461 | 692 | 314 |
| Comparative example 4 | 53.0 | 41.0 | 6.0 | 0.0 | 0.20 | 549 | 459 | 674 | 328 |

It can be known by analyzing various data in table 1 that: the embodiments 1-5 are compared with the comparative examples 1 and 2, when the content of ZnO is lower than 3mol%, the power loss of the soft-magnetic MnZn system power ferrite is increased; and when the content of ZnO is higher than 7mol%, the saturation magnetic flux density of the soft-magnetic MnZn system power ferrite is decreased; (2) the embodiments 4, 6, 7 and 8 are compared with the comparative example 3, and when the content of NiO is higher than 1mol%, the power loss of the soft-magnetic MnZn system power ferrite at 100°C is increased; and (3) the embodiments 4, 9, 10, 11 and 12 are compared with the comparative example 4, when the content of CoO is higher than 0.15wt%, the saturation magnetic flux density of the soft-magnetic MnZn system power ferrite is decreased; and the power loss of the soft-magnetic MnZn system power ferrite at 100°C is increased. It can be seen by comparing various performance in table 1 that: (1) under the test condition of 1194A/m, the saturation magnetic flux density Bs of the soft-magnetic MnZn system power ferrite disclosed by the invention at 25°C is larger than 550mT, and the saturation magnetic flux density Bs at 100°C is larger than 460mT; and under test conditions of 100kHz and 200mT, the power loss Pcv of the soft-magnetic MnZn system power ferrite disclosed by the invention at 25°C is smaller than 750kW/m³, and the power loss Pcv at 100°C is smaller than 320kW/m³. Therefore, the soft-magnetic MnZn system power ferrite disclosed by the invention has both high saturation magnetic flux density Bs and low loss Pcv, so as to have a very good market prospect.

## Claims

1. A soft-magnetic MnZn system power ferrite, **characterized by** comprising a main component and an auxiliary component, wherein the main component comprises Fe₂O₃, MnO, ZnO and NiO, calculated on the basis of the total weight of the main component, Fe₂O₃ accounts for 53.0-55.0mol%, ZnO accounts for 3.0-7.0mol%, NiO accounts for 0-1.0mol%, and MnO accounts for the balance, and the auxiliary component comprises CoO, SiO₂, CaCO₃, Nb₂O₅ and ZrO₂.

2. The soft-magnetic MnZn system power ferrite of claim 1, **characterized in that** the auxiliary component comprises a first auxiliary component and a second auxiliary component, the first auxiliary component is CoO, and calculated on the basis of the total weight of the main component, the content of CoO is 0-0.15wt%.

3. The soft-magnetic MnZn system power ferrite of claim 2, **characterized in that** the second auxiliary component comprises SiO₂, CaCO₃, Nb₂O₅ and ZrO₂, and calculated on the basis of the total weight of the main component, SiO₂ accounts for 0.005-0.015wt%, CaCO₃ accounts for 0.03-0.15wt%, Nb₂O₅ accounts for 0.05-0.4wt%, and ZrO₂ accounts for 0.05-0.4wt%.

4. The soft-magnetic MnZn system power ferrite of claim 1 or 2 or 3, **characterized in that** under a test condition of 1194A/m, saturation magnetic flux density Bs of the soft-magnetic MnZn system power ferrite at 25°C is larger than 550mT, and the saturation magnetic flux density Bs the soft-magnetic MnZn system power ferrite at 100°C is larger than 460mT.

5. The soft-magnetic MnZn system power ferrite of claim 1 or 2 or 3, **characterized in that** under test conditions of 100kHz and 200mT, power loss Pcv of the soft-magnetic MnZn system power ferrite at 25°C is smaller than 750kW/m³, and the power loss Pcv of the soft-magnetic MnZn system power ferrite at 100°C is smaller than 320kW/m³.
